# EUROPÄISCHE PATENTSCHRIFT

(11) **EP 1 589 246 B1**
(45) Veröffentlichungstag und Bekanntmachung des Hinweises auf die Patenterteilung: **11.08.2010**
(21) Anmeldenummer: 04009754.5
(22) Anmeldetag: 24.04.2004
(51) Int. Cl.: F16D 23/14

(54) **Ausrücker für eine Reibungskupplung**
Friction clutch release bearing
Butée de débrayage pour un embrayage à friction

(43) Veröffentlichungstag der Anmeldung: 26.10.2005
(73) Patentinhaber: ZF Friedrichshafen AG, 88046 Friedrichshafen (DE)
(72) Erfinder: Riess, Thomas, 97437 Hassfurt (DE)

(56) Entgegenhaltungen:
- DE-A- 10 114 844
- DE-C- 10 136 424
- GB-A- 814 693
- US-A- 4 159 052
- US-A1- 2002 134 640

## Beschreibung

Die Erfindung betrifft einen Ausrücker für eine Reibungskupplung eines Kraftfahrzeuges.

Eine derartiger Ausrücker (siehe z.B. US 4 159 052, GB 814 693, DE 10 114 844 und US 2002/134 640) dient zum Betätigen einer mit einer Membranfeder als Ausrückorgan ausgestatteten Fahrzeugkupplung, wobei die nach radial innen gerichteten freien Enden der Membranfeder im Anlagekontakt zu einem an einer Verschiebehülse angeordneten Wälzlager stehen. Zur Durchführung einer Ausrückbewegung greift an der Schiebehülse eine Ausrückschwinge oder ein Aktuator an, wobei die Schiebehülse bei einer gedrückten Kupplung eine Axialbewegung in deren Richtung ausführt und wobei sich die über ein Koppelelement an dem Ausrücklager anliegenden Membranfederzungen zunächst elastisch verformen und danach als im Wesentlichen steifer Hebel um einen Drehpunkt am Kupplungsgehäuse verschwenken, wodurch eine Druckplatte der Kupplung entlastet wird. Das bedeutet, dass an dem Kontaktbereich von Ausrücker und Membranfeder eine zunächst axiale Bewegung des Ausrücklagers in eine näherungsweise kreisbahnförmige Verschwenkbewegung der Membranfeder umgesetzt wird. An den Membranfederzungenenden tritt somit ein Radialversatz nach innen auf, welcher zwangsweise durch Reiberscheinungen zwischen den Membranfederzungenenden und der axialen Anlagefläche des Ausrückers begleitet wird. Die wirkende Reibungskraft muss zusätzlich zur Ausrückkraft aufgebracht werden, was sich in der Kupplungspedalkennlinie als Krafthysterese äußert und was als Folgeerscheinung eine Pedalkrafterhöhung bewirkt. Mit zunehmender Laufleistung eines Fahrzeuges stellt sich an der Kontaktstelle ein erhöhter Verschleiß ein, wodurch sich die Reibungsverluste sogar noch erhöhen.

Zur Verbesserung der Ausrückeigenschaften ist es beispielsweise aus der DE 101 36 424 C1 bekannt, axial zwischen den Membranfederzungen und dem sich mitdrehenden Ring des Ausrücklagers eine Kunststoffscheibe anzuordnen, wodurch die Reibungsverluste verringert werden können. Derartige Systeme sind einem Verschleiß unterworfen und werden nach einer überschaubaren Betriebsdauer der Ausrückvorrichtung unwirksam.

Die Erfindung stellt sich die Aufgabe, einen Ausrücker bereitzustellen, bei der eine zwischen einem Ausrücklager und einer Membranfeder auftretende Reibung noch weiter reduziert ist. Des Weiteren soll ein zwischen einem Ausrücklager und einer Kupplungsmembranfeder angeordnetes Koppelelement verbessert werden.

Die vorstehend genannten Aufgaben löst die Erfindung mit einer Ausrückvorrichtung, gemäß Anspruch 1.

Der Erfinder hat erkannt, dass sich die Reibungsverluste im Bereich der Membranfederzungenenden deutlich reduzieren lassen, wenn das an dem Ausrücklager angeordnete Koppelelement und die mit diesem zusammenwirkenden Federzungenenden eine gleichartige Bewegung ausführen können. Der Erfindung liegt die weitere Erkenntnis zugrunde, dass sich eine in etwa kreisbahnförmige Verschwenkbewegung der Membranfederzungen durch eine axiale Bewegung des Ausrückers und eine zusätzliche, dazu radial ausgeführte Bewegung des Koppelelementes nachbilden lässt.
Diese grundlegenden Erfindungsgedanken werden realisiert, indem das Koppelelement funktionell in einen Halteabschnitt und in einen Aufnahmeabschnitt geteilt wird. Der Halteabschnitt dient der Herstellung einer Drehmitnahme zu dem umlaufenden Lagering und der Aufnahmeabschnitt zur Aufnahme der Membranfederzungen, wobei letzterer in radialer Richtung, entgegen einer Rückstellkraft verlagerbar ist. Die Membranfederzungenenden können sich bei einer Axialbewegung des Ausrücklagers an dem Aufnahmeabschnitt abstützen, und zwingen den Aufnahmeabschnitt in radialer Richtung auf deren Verschwenkbahn. Dagegen ist das Koppelelement in axialer Richtung vergleichsweise steif ausgebildet, wodurch die Axialbewegung des Ausrücklagers im Wesentlichen verlustfrei auf die Membranfederzungenenden übertragen werden kann. Eine an der Ausrückvorrichtung an dem Aufnahmeabschnitt wirkende Rückstellkraft bewirkt, dass der Aufnahmeabschnitt sowohl in jeder Phase des Einrückens als auch des Ausrückens der Reibungskupplung an den Membranfederzungen spielfrei anliegt, und somit eine unmittelbare Kraftübertragung gewährleistet ist.

Im Folgenden wird die Erfindung anhand der beigefügten Figuren beispielhaft erläutert. Es zeigen:
- Fig. 1: Eine Übersichtsdarstellung einer Ausrückvorrichtung mit einem am Ausrücklager angeordneten Koppelelement;
- Fig. 2: eine-vergrößerte Detailansicht der Ausrückvorrichtung gemäß Fig. 1;
- Fig. 3: eine Teildarstellung eines erfindungsgemäßen Koppelelementes mit einer daran angeordneten Membranfederzunge;
- Fig. 4: eine Ausrückvorrichtung mit einer im Wesentlichen im Ringraum zwischen dem Führungsrohr und dem Wälzlager an einer Hohlkehle des umlaufenden Lagerringes eingeschnappten Koppelelement;
- Fig. 5: ein in einem Ringraum gemäß Fig. 4 eingepresstes Koppelelement, welches sich an einem Radialkragend es umlaufenden Lagerringes abstützt;
- Fig. 6: ein Koppelelement, welches einteilig mit dem umlaufenden Lagerring ausgeführt ist;
- Fig. 7: ein an einem Ausrücklager angeordnetes rohrförmiges Koppelelement;
- Fig. 8: eine Ausrückvorrichtung mit einem radial außerhalb des Wälzlagers befindlichen Koppelelementes;
- Fig. 9: eine Ausrückvorrichtung mit einem an einem Einstellring angeordneten Koppelelement;
- Fig. 10: ein Ausrücker mit einem als doppelwandiges Rohr ausgeführtes Koppelelement;
- Fig. 11: ein Koppelelement gemäß Fig. 10, welches mit einem Halteblech am Ausrücker befestigt ist.

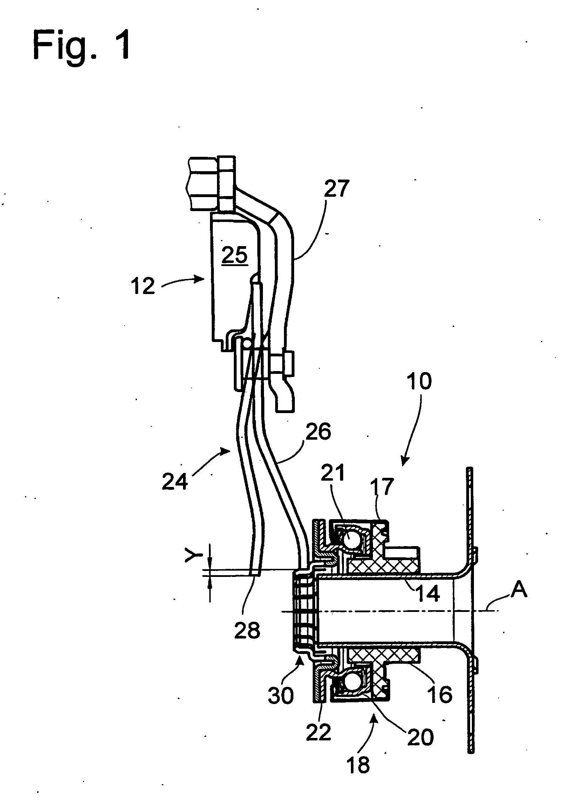

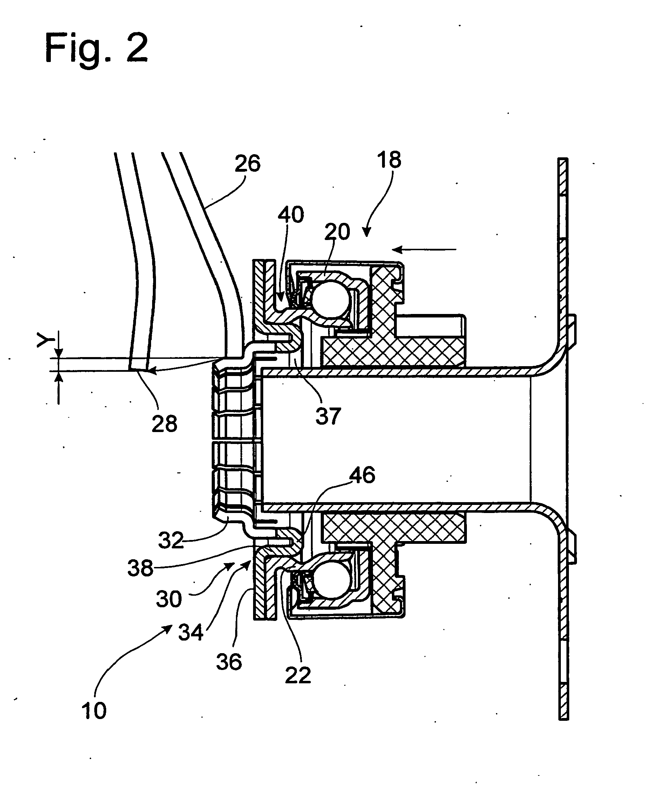

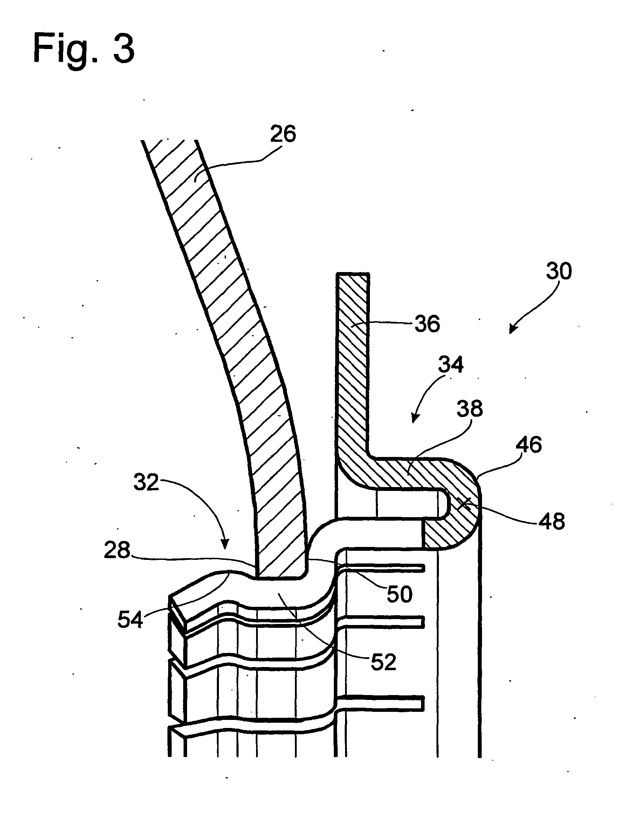

Fig. 1 zeigt in einer Übersichtsdarstellung einen Ausrücker 10 mit einer um ein Führungsrohr 14 angeordneten Schiebehülse 16, welche an einem Ende eines als Wälzlager ausgebildeten Ausrücklagers 18 trägt, das im Anlagekontakt zu Federzungen 26 einer Membranfeder 24 zum Betätigen einer Reibungskupplung 12 steht. Das Wälzlager 18 umfasst einen äußeren, ersten Lagerring 20, der zur Selbstjustage des Ausrücklagers radial gleitbar an einem Ringflansch 17 anliegt, einen inneren, zweiten Lagerring 22 und auf Laufbahnen der Lagerringe 20, 22 geführte Wälzkörper (Kugeln) 21. Die Membranfeder 24 stellt das Ausrückorgan der Reibungskupplung 12 dar, wobei diese mit ihrem radial äußeren Bereich an einer Druckplatte 25 angreift und im eingerückten Zustand eine Kraft auf eine zeichnerisch nicht dargestellte Kupplungsscheibe und ein ebenfalls nicht dargestelltes Schwungrad ausübt. Die Membranfeder 24 ist in Umfangsrichtung an mehreren Positionen an einem Kupplungsgehäuse 27 befestigt, um welche sich die Federzungen 26 mit ihren freien Enden 28 innerhalb der Zeichenebene radial zu einer Achse A der Ausrückvorrichtung beim Ausrücken im begrenzten Maße verschwenken können. Die Wirkverbindung zwischen dem Wälzlager 18 und den Federzungen 26 wird durch ein am Innenring 22 des Wälzlagers 18 angeordnetes Koppelelement 30 hergestellt. Dieses weist, wie in Fig. 2 gezeigt, einen entgegen einer Rückstellkraft elastisch verlagerbaren Aufnahmeabschnitt in Form eines Schwenkarms 32 auf, welcher das freie Ende 28 einer Membranfederzunge 26 mit einem an diesem angeordneten und radial verlaufenden Anlageabschnitt 50 und einem axial verlaufenden Anlageabschnitt 52 (Fig. 3) aufnimmt und abstützt. Zur Herstellung einer axial spielfreien Verbindung ist außerdem an dem Schwenkarm 32 eine Schnappkontur 54 in Form einer nach radial außen gerichteten Radialwulst ausgebildet, in welche die Membranfederzungen 26 einschnappen können. Der Schwenkarm 32 erstreckt sich im Wesentlichen in axialer Richtung und geht in einen radial gerichteten Mittenbereich 46 über, an dem sich ein, zumindest abschnittweise zu dem Schwenkarm 32 parallel erstreckender Rohransatz 38 anschließt, welcher wiederum in einen nach radial außen, eine Scheibe 36 formenden Bereich mündet. Wie insbesondere aus Fig. 2 erkennbar, bilden die Scheibe 36 und der sich axial erstreckende Rohransatz 38 einen Halteabschnitt 34, mit dem das Koppelelement 30 an einem dazu korrespondierend ausgebildeten Fortsatz 40 an dem umlaufenden Lagerring 22 angeordnet ist. Die Anbindung des Koppelelementes 30 an den umlaufenden Lagerring 22 kann radial spielbehaftet sein, um eine Selbstjustage der Federzungen im Falle eines Versatzes der Rotationsachse der Kupplung zu der Achse A zu ermöglichen.

Das Koppelelement 30 bildet mit den an den Mittenbereich 46 beidseitig angrenzenden Abschnitten 38, 32 eine U-förmige Schleife aus, die im Wesentlichen in einem radial zwischen dem Führungsrohr 14 und dem Wälzlager 18 ausgebildeten Ringraum 37 angeordnet ist. Das Koppelelement 30 ist zur spiel- und verlustfreien Übertragung einer axialen Ausrückbewegung des Ausrückers 10 im Wesentlichen axial sehr steif ausgebildet, wohingegen der in Wirkverbindung mit den Membranfederzungenenden 28 stehende Schwenkarm 32 eine Radialbewegung zulässt. Das Koppelelement 30 weist vorzugsweise eine der Membranfederzungen 26 entsprechende Anzahl von Aufnahmeabschnitten 32 auf.

Bei einer axialen Ausrückbewegung des Ausrückers in Richtung der Kupplung 12 wird der Schwenkarm 32 in Folge des mit dem Verschwenken der Membranfederzungenenden 28 einhergehenden Radialversatzes Y (Fig. 2) ebenfalls, entgegen einer radial nach außen wirkenden Rückstellkraft nach radial innen gezwungen, wobei der Schwenkarm 32 näherungsweise um ein in den Mittenbereich 46 gedachtes Verschwenkzentrum 48 verschwenkt wird. Die Bewegung des Schwenkarms 32 setzt sich somit aus einer Axialbewegung und einer dazu überlagerten Radialbewegung zusammen, wodurch eine exakte Anpassung an die in Folge erzwungene Verschwenkbewegung der Federzungen 26 realisiert wird. Durch diese Überlagerung tritt an dem Ende 28 einer Federzunge eine nur unwesentliche Reibung zu dem Schwenkarm 32 auf, welcher durch eine Verrundung des freien Endes 28 und einer daran angepassten Kontur des radialen Anlageabschnitts 50 und des axialen Anlageabschnitts 52 noch weiter beträchtlich reduziert werden kann, indem durch die vorgeschlagene Ausbildung eine gegenseitige Abrollbewegung des Membranfederzungenendes 28 auf dem Schwenkarm 32 möglich wird. Zu diesem Zweck können auch die Membranfederzungenenden 28 möglichst scharfkantig und spitzwinklig ausgeführt und von einem ebenfalls möglichst scharfkantigen Aufnahmeabschnitt 32 des Koppelelementes 30 aufgenommen werden.

Das Verschwenkzentrum 48 ist in dem Ausführungsbeispiel der Figuren 1 - 3 auf der dem Wälzlager 18 zugewandten Axialseite der Membranfeder 24 angeordnet, wobei dieses gleichzeitig eine gegenüber den Federzungenenden 28 weiter außen liegende Radiallage einnimmt. Die radiale Bewegungskomonente des Schwenkarmes 32 wird in diesem Fall zusätzlich mit einer axialen zu dem Wälzlager 18 gerichteten Bewegungskomponente überlagert, welche jedoch in Bezug auf die axiale Eingangsbewegung des Ausrückers 10 vergleichsweise klein ist.

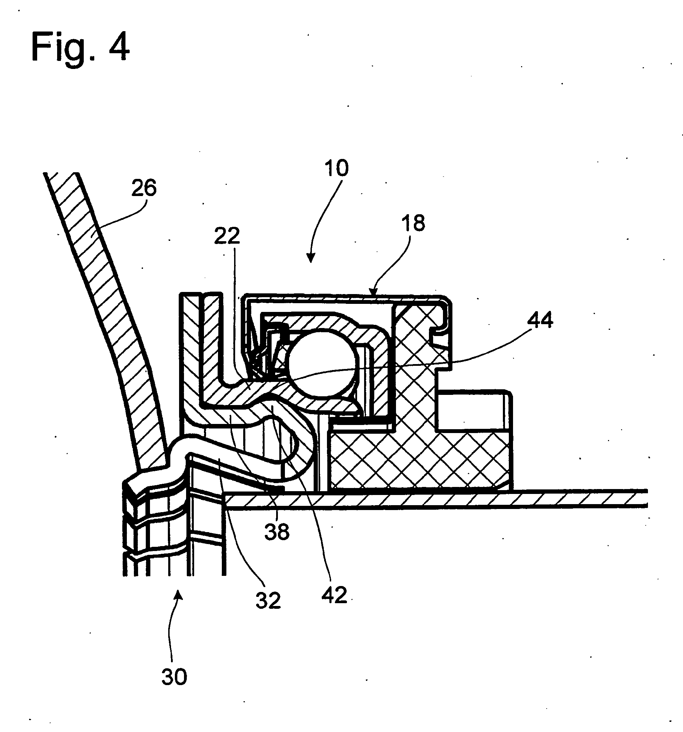

In dem in den Fig. 1 - 3 beschriebenen Ausführungsbeispiel ist das Koppelelement 30 mittels einer Presspassung mit dessen Rohransatz 38 in den Lagerinnenring 22 eingepresst. Gemäß Fig. 4 kann zusätzlich oder alternativ dazu das Koppelelement 30 auch in dem Lagerring 22 axial gesichert werden, indem der Rohransatz 38 eine Radialwulst 42 ausbildet, welche in eine an dem umlaufenden Ring 22 geformte Hohlkehle 44 eingreift.

Eine noch bessere Axialabstützung des Koppelelementes 30 kann durch einen unmittelbaren Anlagekontakt des sich radial erstreckenden Mittenbereichs 46 an dem Ausrücklager 18 erreicht werden. Der Innenring 22 des Lagers 18 ist zu diesem Zweck mit einem nach innen gerichteten Radialkragen 56 versehen, welcher zusätzlich zu einem weiteren radial außen angeordneten Radialkragen 57 Axialkräfte aufnehmen und übertragen kann. Das Verschwenkzentrum 48 ist in diesem Ausführungsbeispiel etwa am Übergang des Mittenbereichs 46 in dem Schwenkarm 32 angeordnet und befindet sich auf einer im Wesentlichen gleichen Radiallage wie die Federzungenenden 28, wodurch der Schwenkarm 32 beim Verschwenken nur unwesentlich nach axial, jedoch hauptsächlich nach radial innen bewegt werden kann.

Selbstverständlich kann das Verschwenkzentrum 48 auch gegenüber den Membranfederzungenenden 28 radial innen angeordnet sein, was dazu führt, dass zusätzlich zu der von dem Ausrücklager 18 ausgeführten Axialbewegung die beim Verschwenken des Schwenkarms 32 auftretende Axialkomponente addiert wird. Eine derartige Auslegung führt bei einem verkürzten Betätigungsweg zu einer etwas erhöhten Betätigungskraft im Verlauf des Ausrückvorganges. Wenn beispielsweise zur Optimierung der Kraftübertragung das Verschwenkzentrum etwa um den halben Betrag des Radialversatzes Y der Federzungenenden gegenüber deren Position nach radial innen verlagert wird, ergibt sich in einem Anfangsbetätigungsabschnitt wegen der zum Ausrücken gleichgerichteten Axialkomponente des Schwenkarms 32 zunächst eine erhöhte Kraftanforderung, welche jedoch in einem Endbetätigungsabschnitt durch die dann dem Ausrückvorgang entgegenwirkende Axialkomponente eine im Vergleich zu bekannten Reibungskupplungen reduzierte Kraftanforderung zur Folge hat. Auf diese Weise kann das bei membranfederbetätigten Kupplungen bekannte Betätigungskraftmaximum reduziert und für den Fahrer eine spürbarer Komfortgewinn erzielt werden.

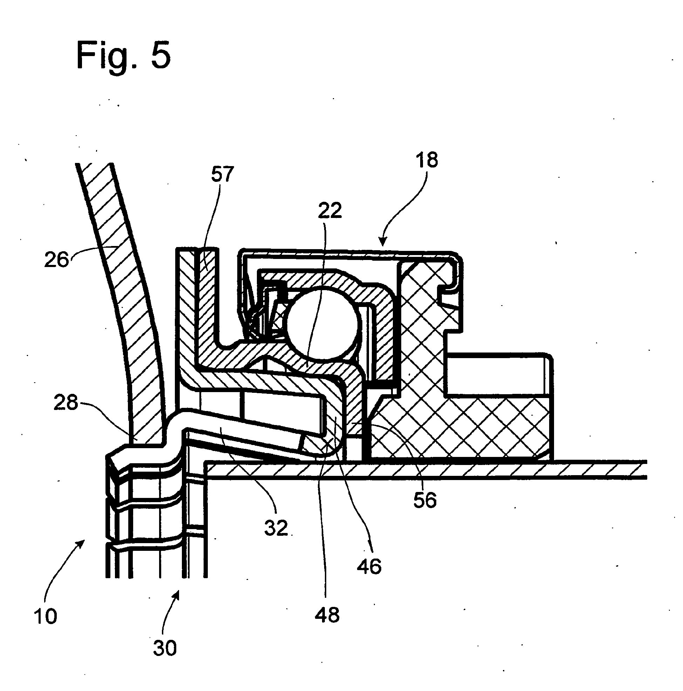

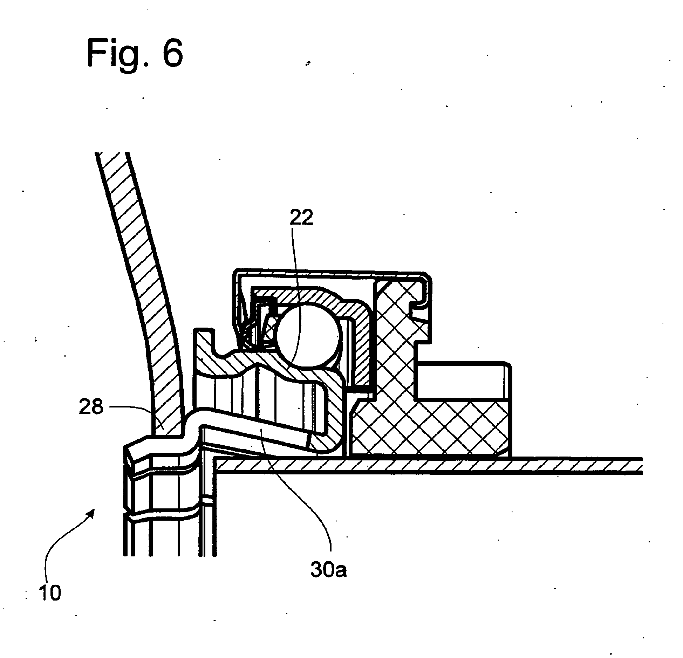

Gemäß Fig. 6 kann die Anordnung gemäß Fig. 5 noch weiter vereinfacht werden, indem das Koppelelement 30a einteilig mit dem umlaufenden Lagerring ausgeführt wird.

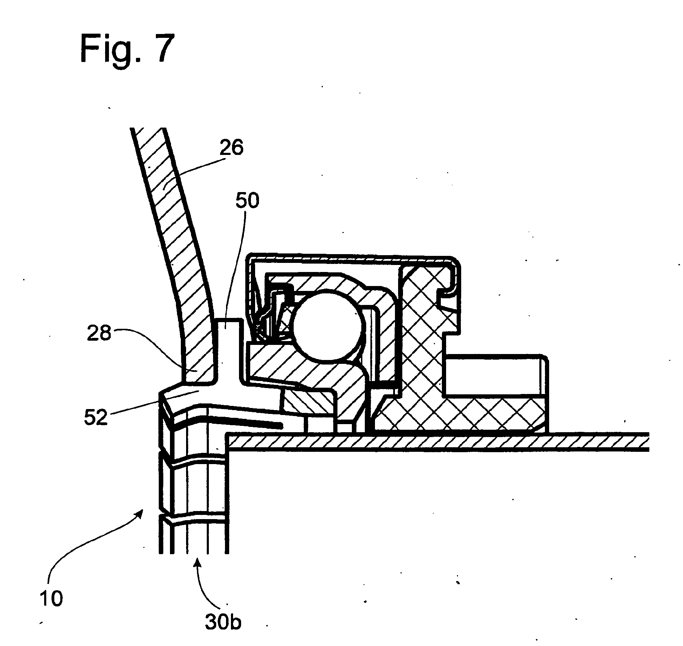

Im Gegensatz zu den in den Fig. 1 - 6 dargestellten Ausführungsbeispielen, bei welchen der Schwenkarm einen elastisch beweglichen Schenkel eines U-schleifenförmigen Bereichs am Koppelelement 30 ausbildet, ist das in Fig. 7 dargestellte Koppelelement 30b noch weiter konstruktiv vereinfacht. Dieses ist im Wesentlichen rohrförmig gestaltet und greift mit dessen einen axialen Endbereich, welcher einen Halteabschnitt 34 bildet, in einen von dem Innenring 22 gebildeten Radialkragen 56 ein, welcher die Dreh- und Ausrückbewegung des Koppelelementes 30b überträgt.

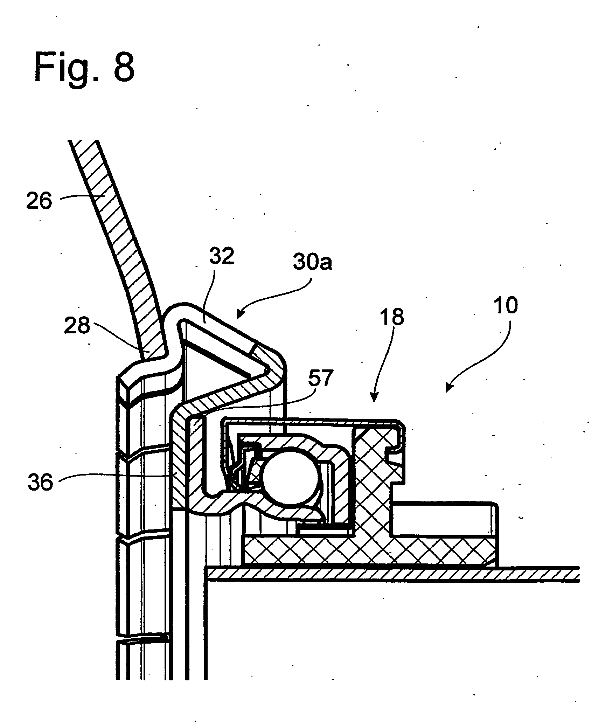

In Fig. 8 ist eine Variante eines Ausrückers 10 dargestellt, bei der das Koppelelement 30c axial zwischen den Membranfederzungenenden 28 und dem umlaufenden Wälzlagerinnenring 22 durch die Vorspannung der Membranfeder 24 an einem Radialkragen 57 des Ausrücklagers 18 gehalten wird. Die Membranfederzungen 26 sind gegenüber den vorbeschriebenen Ausführungsbeispielen radial verkürzt ausgeführt und greifen radial außerhalb des Wälzlagers 18 an den Verschwenkarmen 32 des Koppelelementes 30c an. Eine derartige Anordnung kann in den Anwendungsfällen sinnvoll sein, wo aufgrund eines vorgegebenen Bauraumes das Wälzlager 18 möglichst nahe an der Achse A der Ausrückvorrichtung angeordnet sein soll.

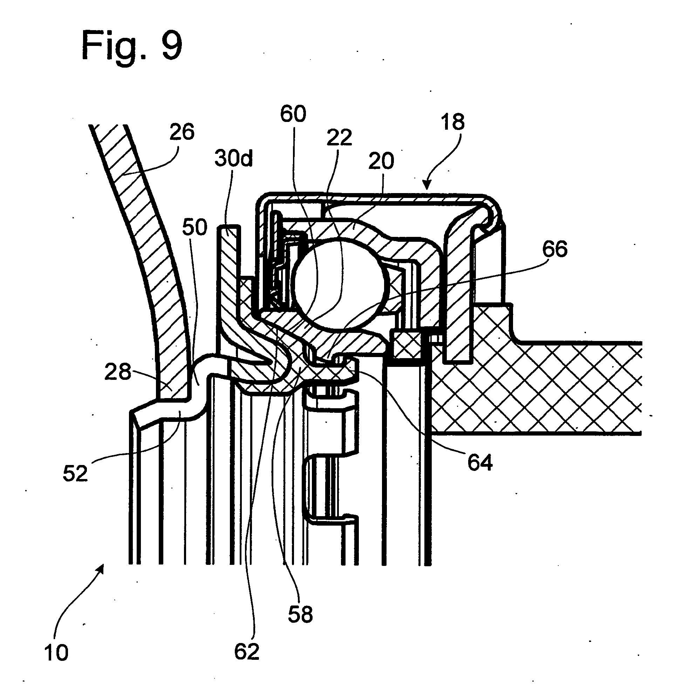

Ebenso lässt sich gemäß Fig. 9 ein erfindungsgemäßes Koppelelement 30d mit einem Ausrücker mit einer Einrichtung zum Ausgleich von Taumelbewegungen realisieren. Diese Einrichtung weist einen als Gleitelement arbeitenden Kunststoffeinstellring 58 mit einem konvex in Richtung des Wälzlagers 18 ausgerichteten Flächenabschnitt 62 auf, der mit einem am Innenring 22 ausgeformten konkaven Flächenabschnitt 60 mit einem dazu identischen Kugelradius in Anlagekontakt steht. Der Einstellring 58 hintergreift mittels Rasthaken 64 einen am Innenring 22 nach radial innen gerichteten Ringsteg 66, wodurch insgesamt eine verliersichere, jedoch verschwenkbewegliche Anordnung geschaffen wird. Das Koppelelement 30d ist mit dem Einstellring 58 drehfest verbunden, indem diese beispielsweise ebenfalls durch eine Formschlußverbindung, z.B. in Form einer Schnappverbindung verbunden sind, oder wobei der Kunststoffeinstellring 58 an das Koppelelement 30d angespritzt ist. Hierbei kann das Koppelelement 30d zugleich eine Versteifung bzw. eine Basisstruktur für den Einstellring 58 bilden, welcher dann weniger massiv ausgeführt werden braucht.

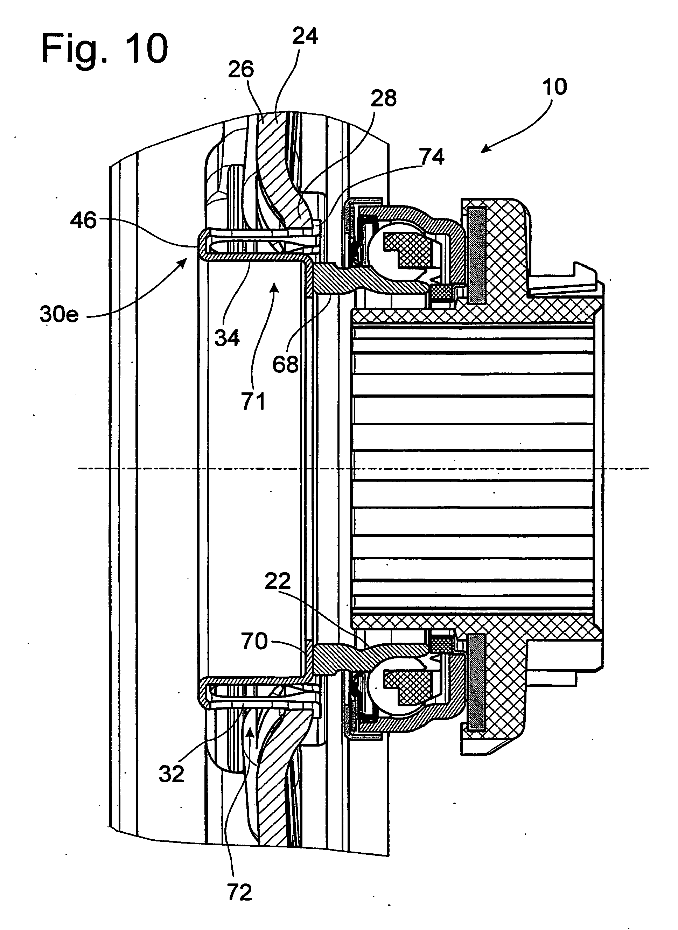

In einem noch weiteren Ausführungsbeispiel gemäß Fig. 10 ist das Koppelelement 30e als doppelwandiges, einseitig durch den Mittenbereich 46 geschlossenes Rohrprofil mit einem radial innen angeordneten Rohrabschnitt 71, welcher den Halteabschnitt bildet, und mit einem radial außen befindlichen, in Umfangsrichtung segmentierten und dabei Schwenkarme 32 aufweisenden Rohrabschnitt 72 konzipiert. Der innere Rohrabschnitt 34 stützt sich mit einem ringförmigen Anlageabschnitt 70 radial, zu Justagezwecken verschiebbar, am Endbereich eines Axialvorsprungs 68 des Innenringes 22 ab, wodurch das Koppelelement 30e am Ausrücklager 18 selbstzentrierbar gehalten wird. Das Koppelelement 30e erstreckt sich im Wesentlichen auf der der Kupplung 12 zugewandten Axialseite der Membranfeder 24, wobei die Membranfederzungenenden 28 von einem nach radial außen gerichteten Bund 74 hintergriffen werden und dadurch bei einem Ausrückvorgang in Richtung der Kupplung 12 verschwenkt werden können. Der innenliegende Rohrabschnitt 71 ist axial äußerst steif ausgeprägt, wohingegen die Axialsteifigkeit bei der Auslegung der Schwenkarme 32 in Folge der gegenüber den bisher beschriebenen Ausführungsbeispielen erzeugten Richtungsumkehr der an den Federzungenenden 28 wirkenden Ausrückkraft eine untergeordnete Rolle spielt. Dadurch können die Schwenkarme 32 bezüglich ihrer radial elastischen Verlagerbarkeit optimiert werden. Diese Variante ist gegenüber den aus dem Stand der Technik bekannten Ausführungsbeispielen etwa bauraumneutral, da zur Anordnung des Koppelelementes 30e ein bisher ungenutzter Freiraum beansprucht wird.

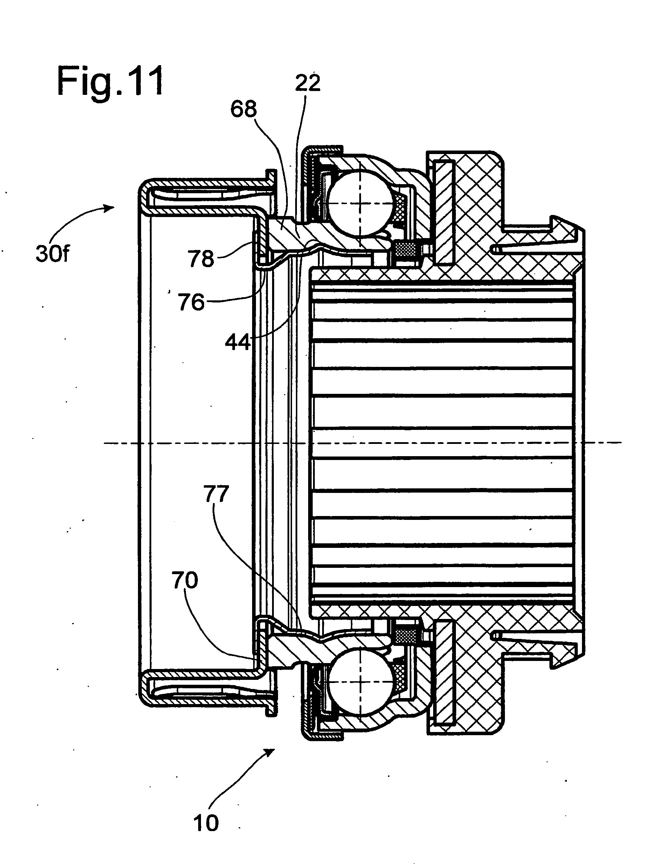

Das in Fig. 10 dargestellte Koppelelement 30e liegt allein durch eine Vorspannung der Membranfederzungen 26 am Lagerinnenring 22 an. Gemäß Fig. 11 ist zur verliersicheren Anordnung des Koppelelements 30f am Ausrücker 10 zusätzlich ein Halteblech 76 vorgesehen, welches mit einem Rohrabschnitt 77 in die Hohlkehle 44 am Innenring 22 einschnappt und mit einem nach außen gerichteten Ringkragen 78 den Anlageabschnitt 70 des Koppelelementes 30f an dem Axialvorsprung 68 hält.

Das in den Figuren 1-11 beschriebene Koppelelement lässt sich vorteilhaft durch übliche Umform- und Vergütungstechniken aus Federstahl herstellen. Bei allen Varianten kann ausserdem vorgesehen sein, dass das Koppelelement Eingriffsmittel, z.B. Radialstege, aufweist, welche in den von den Membranfederzungen gebildeten Zwischenraum zur Drehmitnahme eingreifen. Ein Koppelelement kann wahlweise entweder am Ausrücker oder an der Membranfeder vormontiert, und damit dem Lieferumfang des Ausrückers oder dem der Kupplung zugeordnet werden.

### Bezugszeichenliste

- 10: Ausrücker
- 12: Reibungskupplung
- 14: Führungsrohr
- 16: Schiebehülse
- 17: Ringflansch
- 18: Ausrücklager, Wälzlager
- 20: erster Lagerring
- 21: Wälzkörper
- 22: zweiter Lagerring
- 24: Membranfeder
- 25: Druckplatte
- 26: Federzunge
- 27: Kupplungsgehäuse
- 28: Federzungenende
- 30, 30a-f: Koppelelement
- 32: Aufnahmeabschnitt, Schwenkarm
- 34: Halteabschnitt
- 36: Scheibe
- 37: Ringraum
- 38: Rohransatz
- 40: Fortsatz
- 42: Radialwulst
- 44: Hohlkehle
- 46: Mittenbereich
- 48: Verschwenkzentrum
- 50: radialer Anlageabschnitt
- 52: axialer Anlageabschnitt
- 54: Schnappkontur
- 56, 57: Radialkragen
- 58: Einstellring
- 60: konkaver Abschnitt
- 62: konvexer Abschnitt
- 64: Rasthaken
- 66: Ringsteg
- 68: Axialvorsprung
- 70: Anlageabschnitt
- 71: innerer Rohrabschnitt
- 72: äußerer Rohrabschnitt
- 74: Bund
- 76: Halteblech
- 77: Rohrabschitt
- 78: Ringkragen
- Y: Radialversatz

## Patentansprüche

1. Ausrücker (10) für eine Reibungskupplung (12) eines Kraftfahrzeuges, umfassend
- ein Führungsrohr (14),
- eine auf dem Führungsrohr (14) axial verlagerbare Schiebehülse (16),
- ein koaxial an der Schiebehülse (16) angeordnetes Ausrücklager (18) mit einem drehfest zu der Schiebehülse (16) angeordneten ersten Lagerring (20), Wälzkörpern (21) und mit einem umlaufenden zweiten Lagerring (22),
- ein Koppelelement (30, 30a-f), welches in Wirkverbindung zwischen dem umlaufenden Lagerring (22) und einem freien Ende (28) von Federzungen (26) einer als Betätigungsorgan der Reibungskupplung (12) dienenden Membranfeder (24) angeordnet ist,
**dadurch gekennzeichnet,**
**dass** das Koppelelement (30, 30a-f) einen entgegen einer Rückstellkraft in radialer Richtung verlagerbaren, als elastischen Schwenkarm ausgebildeten Aufnahmeabschnitt (32) aufweist, der einen radialen Anlageabschnitt (50) und einen sich daran anschließenden axialen Anlageabschnitt (52) umfasst, an welchen die Membranfederzungenenden (28) sowohl radial als auch axial anliegen und wobei das Koppelement (30, 30a-f) mit einem Halteabschnitt (34) zu dem umlaufenden Lagerring (22) angeordnet ist, wodurch bei einer Axialbetätigung des Ausrückers (10) eine radiale Verlagerung der Membranfederzungenenden (28) im Wesentlichen reibungsfrei von dem Koppelelement (30, 30a-f) aufgenommen werden kann.

2. Ausrücker nach Anspruch 1,
**dadurch gekennzeichnet,**
**dass** die Anzahl der Aufnahmeabschnitte (32) des Koppelelements (30, 30a-f) der Anzahl der Membranfederzungen (26) entspricht.

3. Ausrücker nach Anspruch 2,
**dadurch gekennzeichnet,**
**dass** der Schwenkarm (32) zumindest teilweise in einem radial zwischen dem Führungsrohr (14) und dem Wälzlager (18) ausgebildeten Ringraum (37) angeordnet ist.

4. Ausrücker nach Anspruch 2 oder 3,
**dadurch gekennzeichnet,**
**dass** der Schwenkarm (32) radial außerhalb des Wälzlagers (18) angeordnet ist.

5. Ausrücker nach einem der vorhergehenden Ansprüche,
**dadurch gekennzeichnet,**
**dass** der Halteabschnitt (34) eine sich radial erstreckende Scheibe (36) und einen sich axial erstreckenden Rohransatz (38) umfasst, mit denen das Koppelelement (30) an einem dazu korrespondierend ausgebildeten Fortsatz (40) an dem umlaufenden Lagerring (22) angeordnet ist.

6. Ausrücker nach Anspruch 5,
**dadurch gekennzeichnet,**
**dass** der Rohransatz (38) eine Radialwulst (42) aufweist, welche in eine an dem umlaufenden Ring (22) geformte Hohlkehle (44) eingreift.

7. Ausrücker nach einem der vorhergehenden Ansprüche,
**dadurch gekennzeichnet,**
**dass** der Schwenkarm (32) im Wesentlichen axial ausgeführt ist und sich über einen Mittenbereich (46) an den Rohransatz (38) des Halteabschnitts (34) anschließt.

8. Ausrücker nach einem der vorhergehenden Ansprüche,
**dadurch gekennzeichnet,**
**dass** der Schwenkarm (32) eine etwa kreisförmige Verschwenkbewegung um ein im Mittenbereich (46) oder im Halteabschnitt (34) gedachtes Verschwenkzentrum (48) ausführen kann.

9. Ausrücker nach Anspruch 8,
**dadurch gekennzeichnet,**
**dass** das Verschwenkzentrum (48) auf der dem Wälzlager (18) zugewandten Axialseite der Membranfeder (24) angeordnet ist.

10. Ausrücker nach Anspruch 8,
**dadurch gekennzeichnet,**
**dass** das Verschwenkzentrum (48) auf der der Kupplung (12) zugewandten Axialseite der Membranfeder (24) angeordnet ist.

11. Ausrücker nach einem der Ansprüche 8-10,
**dadurch gekennzeichnet,**
**dass** das Verschwenkzentrum (48) auf einer im Wesentlichen gleichen Radiallage wie die Federzungenenden (28) angeordnet ist.

12. Ausrücker nach einem der vorhergehenden Ansprüche,
**dadurch gekennzeichnet,**
**dass** der Schwenkarm (32) eine Schnappkontur (54) zur Aufnahme eines Membranfederzungenendes (28) aufweist.

13. Ausrücker nach einem der Ansprüche 7-12,
**dadurch gekennzeichnet,**
**dass** sich der Mittenbereich (46) des Koppelelements (30) an dem Ausrücker abstützt.

14. Ausrücker nach einem der vorhergehenden Ansprüche,
**dadurch gekennzeichnet**,
das der umlaufende Lagerring (22) einteilig mit dem Koppelelement (30) ausgeführt ist.

15. Ausrücker nach einem der vorhergehenden Ansprüche,
**dadurch gekennzeichnet, dass** das Koppelelement (30b) im Wesentlichen rohrförmig geformt ist.

16. Ausrücker nach einem der vorhergehenden Ansprüche,
**dadurch gekennzeichnet, dass** das Koppelelement (30, 30a-f) Eingriffsmittel aufweist, welche in den von den Membranfederzungen (26) gebildeten Zwischenräumen zur Drehmitnahme eingreifen.

17. Ausrücker nach einem der vorhergehenden Ansprüche,
wobei der Ausrücker (10) eine Einrichtung zum Ausgleich von Taumelbewegungen mit einem Einstellring (58) aufweist, welcher mit dem umlaufenden Lagerring (22) einen gemeinsamen Kontaktbereich (60,62) für eine begrenzte gegenseitige Verschwenkung aufweist,
**dadurch gekennzeichnet,**
**dass** das Koppelelement (30d) am Einstellring (58) angeordnet ist.

18. Ausrücker nach Anspruch 19,
**dadurch gekennzeichnet,**
**dass** der Einstellring (58) spielbehaftet und verliersicher an dem umlaufenden Lagerring (22) angeordnet ist.

19. Ausrücker nach einem der vorhergehenden Ansprüche,
**dadurch gekennzeichnet, dass** das Koppelelement (30, 30a-f) aus Federstahl geformt ist.

## Claims

1. Release bearing (10) for a friction clutch (12) of a motor vehicle, comprising
- a guide tube (14),
- a sliding sleeve (16) which is axially movable on the guide tube (14),
- a release bearing (18) which is arranged coaxially on the sliding sleeve (16) and has a first bearing ring (20) arranged rotationally fixedly with respect to the sliding sleeve (16), has rolling bodies (21) and has an encircling second bearing ring (22),
- a coupling element (30, 30a-f) which is arranged in operative connection between the encircling bearing ring (22) and a free end (28) of spring tongues (26) of a diaphragm spring (24) which serves as an actuating member of the friction clutch (12),
**characterized**
**in that** the coupling element (30, 30a-f) has a holding section (32) which is movable in the radial direction counter to a restoring force and which is formed as an elastic pivot arm and which comprises a radial contact section (50) and, adjoining the latter, an axial contact section (52), against which the diaphragm spring tongue ends (28) bear both radially and axially, the coupling element (30, 30a-f) being arranged with a retaining section (34) with respect to the encircling bearing ring (22), as a result of which, during an axial actuation of the release bearing (10), a radial movement of the diaphragm spring tongue ends (28) can be accommodated substantially without friction by the coupling element (30, 30a-f).

2. Release bearing according to Claim 1, **characterized**
**in that** the number of holding sections (32) of the coupling element (30, 30a-f) corresponds to the number of diaphragm spring tongues (26).

3. Release bearing according to Claim 2, **characterized**
**in that** the pivot arm (32) is arranged at least partially in an annular chamber (37) formed radially between the guide tube (14) and the rolling bearing (18).

4. Release bearing according to Claim 2 or 3, **characterized**
**in that** the pivot arm (32) is arranged radially outside the rolling bearing (18).

5. Release bearing according to one of the preceding claims,
**characterized**
**in that** the retaining section (34) comprises a radially extending disk (36) and an axially extending tubular projection (38), by means of which the coupling element (30) is arranged on a projection (40), which is designed correspondingly thereto, on the encircling bearing ring (22).

6. Release bearing according to Claim 5, **characterized**
**in that** the tubular projection (38) has a radial bead (42) which engages into a groove (44) formed on the encircling ring (22).

7. Release bearing according to one of the preceding claims,
**characterized**
**in that** the pivot arm (32) is of substantially axial design and adjoins the tubular projection (38) of the retaining section (34) via a central region (46).

8. Release bearing according to one of the preceding claims,
**characterized**
**in that** the pivot arm (32) can perform an approximately circular pivoting movement about an imaginary pivot centre (48) in the central region (46) or in the retaining section (34).

9. Release bearing according to Claim 8, **characterized**
**in that** the pivot centre (48) is arranged on that axial side of the diaphragm spring (24) which faces towards the rolling bearing (18).

10. Release bearing according to Claim 8, **characterized**
**in that** the pivot centre (48) is arranged on that axial side of the diaphragm spring (24) which faces towards the clutch (12).

11. Release bearing according to one of Claims 8-10, **characterized**
**in that** the pivot centre (48) is arranged in substantially the same radial position as the spring tongue ends (28).

12. Release bearing according to one of the preceding claims,
**characterized**
**in that** the pivot arm (32) has a snap-action contour (54) for holding a diaphragm spring tongue end (28).

13. Release bearing according to one of Claims 7-12, **characterized**
**in that** the central region (46) of the coupling element (30) is supported on the release bearing.

14. Release bearing according to one of the preceding claims,
**characterized**
**in that** the encircling bearing ring (22) is formed in one piece with the coupling element (30).

15. Release bearing according to one of the preceding claims,
**characterized**
**in that** the coupling element (30b) is of substantially tubular design.

16. Release bearing according to one of the preceding claims,
**characterized**
**in that** the coupling element (30, 30a-f) has engagement means which engage, to form a rotationally driving connection, into the intermediate spaces formed by the diaphragm spring tongues (26).

17. Release bearing according to one of the preceding claims,
the release bearing (10) having a device for compensating wobbling movements with an adjusting ring (58) which has a common contact region (60, 62) with the encircling bearing ring (22) for a limited relative pivoting movement,
**characterized**
**in that** the coupling element (30d) is arranged on the adjusting ring (58).

18. Release bearing according to Claim 19, **characterized**
**in that** the adjusting ring (58) is arranged with play and in a captively held fashion on the encircling bearing ring (22).

19. Release bearing according to one of the preceding claims,
**characterized**
**in that** the coupling element (30, 30a-f) is formed from spring steel.

## Revendications

1. Butée de débrayage (10) pour un embrayage à friction (12) d'un véhicule automobile, comprenant:
- un tube de guidage (14),
- un manchon coulissant (16) déplaçable axialement sur le tube de guidage (14),
- un palier de débrayage (18) disposé coaxialement sur le manchon coulissant (16), avec une première bague de palier (20) disposée de manière solidaire en rotation par rapport au manchon coulissant (16), des corps de roulement (21) et une deuxième bague de palier périphérique (22),
- un élément d'accouplement (30, 30a-f), qui est disposé en liaison fonctionnelle entre la bague de palier périphérique (22) et une extrémité libre (28) de langues de ressort (26) d'un ressort à membrane (24) servant d'organe d'actionnement de l'embrayage à friction (12),
**caractérisée en ce que**
l'élément d'accouplement (30, 30a-f) présente une portion de réception (32) pouvant être décalée dans la direction radiale à l'encontre d'une force de rappel, réalisée sous forme de bras pivotant élastique, qui comprend une portion d'appui radiale (50) et une portion d'appui axiale (52) s'y raccordant, sur lesquelles s'appliquent les extrémités des langues de ressort à membrane (28) à la fois radialement et axialement, l'élément d'accouplement (30, 30a-f) étant disposé avec une portion de retenue (34) vers la bague de palier périphérique (22), de sorte que dans le cas d'un actionnement axial de la butée de débrayage (10), un décalage radial des extrémités des langues de ressort à membrane (28) peut être reçu sensiblement sans frottement par l'élément d'accouplement (30, 30a-f).

2. Butée de débrayage selon la revendication 1, **caractérisée en ce que**
le nombre des portions de réception (32) de l'élément d'accouplement (30, 30a-f) correspond au nombre des langues de ressort à membrane (26).

3. Butée de débrayage selon la revendication 2, **caractérisée en ce que**
le bras pivotant (32) est disposé au moins en partie dans un espace annulaire (37) réalisé radialement entre le tube de guidage (14) et le palier à roulement (18).

4. Butée de débrayage selon la revendication 2 ou 3, **caractérisée en ce que**
le bras pivotant (32) est disposé radialement en dehors du palier à roulement (18).

5. Butée de débrayage selon l'une quelconque des revendications précédentes,
**caractérisée en ce que**
la portion de retenue (34) comprend un disque (36) s'étendant radialement et un insert tubulaire (38) s'étendant axialement, avec lesquels l'élément d'accouplement (30) est disposé contre une saillie (40) réalisée de manière correspondante sur la bague de palier périphérique (22).

6. Butée de débrayage selon la revendication 5, **caractérisée en ce que**
l'insert tubulaire (38) présente un bourrelet radial (42), qui vient en prise dans une goulotte (44) formée sur la bague périphérique (22).

7. Butée de débrayage selon l'une quelconque des revendications précédentes,
**caractérisée en ce que**
le bras pivotant (32) est réalisé essentiellement axialement et se raccorde par le biais d'une région centrale (46) à l'insert tubulaire (38) de la portion de retenue (34).

8. Butée de débrayage selon l'une quelconque des revendications précédentes,
**caractérisée en ce que**
le bras pivotant (32) peut effectuer un mouvement de pivotement approximativement circulaire autour d'un centre de pivotement (48) imaginaire dans la région centrale (46) ou dans la portion de retenue (34).

9. Butée de débrayage selon la revendication 8, **caractérisée en ce que**
le centre de pivotement (48) est disposé du côté axial du ressort à membrane (24) tourné vers le palier à roulement (18).

10. Butée de débrayage selon la revendication 8, **caractérisée en ce que**
le centre de pivotement (48) est disposé du côté axial du ressort à membrane (24) tourné vers l'embrayage (12).

11. Butée de débrayage selon l'une quelconque des revendications 8 à 10,
**caractérisée en ce que**
le centre de pivotement (48) est disposé sur une position radiale essentiellement identique aux extrémités des langues de ressort (28).

12. Butée de débrayage selon l'une quelconque des revendications précédentes,
**caractérisée en ce que**
le bras pivotant (32) présente un contour encliquetable (54) pour recevoir une extrémité des langues de ressort à membrane (28).

13. Butée de débrayage selon l'une quelconque des revendications 7 à 12,
**caractérisée en ce que**
la région centrale (46) de l'élément d'accouplement (30) s'appuie sur la butée de débrayage.

14. Butée de débrayage selon l'une quelconque des revendications précédentes,
**caractérisée en ce que**
la bague de palier périphérique (22) est réalisée d'une seule pièce avec l'élément d'accouplement (30).

15. Butée de débrayage selon l'une quelconque des revendications précédentes,
**caractérisée en ce que**
l'élément d'accouplement (30b) est essentiellement tubulaire.

16. Butée de débrayage selon l'une quelconque des revendications précédentes,
**caractérisée en ce que**
l'élément d'accouplement (30, 30a-f) présente des moyens d'engagement qui viennent en prise pour l'entraînement en rotation conjoint dans les espaces intermédiaires formés par les langues de ressort à membrane (26).

17. Butée de débrayage selon l'une quelconque des revendications précédentes,
dans laquelle la butée de débrayage (10) présente un dispositif pour compenser les mouvements de nutation avec une bague d'ajustement (58), qui présente avec la bague de palier périphérique (22) une région de contact commune (60, 62) pour un pivotement mutuel limité,
**caractérisée en ce que**
l'élément d'accouplement (30d) est disposé sur la bague d'ajustement (58).

18. Butée de débrayage selon la revendication 19, **caractérisée en ce que**
la bague d'ajustement (58) est disposée avec jeu et de manière imperdable sur la bague de palier périphérique (22).

19. Butée de débrayage selon l'une quelconque des revendications précédentes,
**caractérisée en ce que**
l'élément d'accouplement (30, 30a-f) est formé en acier à ressort.
